# EUROPEAN PATENT APPLICATION

(11) **EP 4 664 593 A1**
(43) Date of publication of application: **17.12.2025**
(21) Application number: 24890497.1
(22) Date of filing: 29.10.2024
(51) Int. Cl.: H01M 10/0567, H01M 10/0525

(54) **ELECTROLYTE, LITHIUM-ION BATTERY, AND ELECTRIC DEVICE**

(30) Priority: 15.11.2023 CN 202311523508
(71) Applicant: Contemporary Amperex Technology Co., Limited, Ningde, Fujian 352100 (CN)
(72) Inventor: JIANG, Hao, Ningde, Fujian 352100 (CN); CHEN, Aosai, Ningde, Fujian 352100 (CN); YANG, Chenglong, Ningde, Fujian 352100 (CN); GAO, Jingyu, Ningde, Fujian 352100 (CN); CHEN, Yan, Ningde, Fujian 352100 (CN); ZHANG, Haiming, Ningde, Fujian 352100 (CN); YU, Honggang, Ningde, Fujian 352100 (CN)
(74) Representative: Jacob, Reuben Ellis
(86) International application number: PCT/CN2024/128206
(87) International publication number: WO 2025/103140

(57) **Abstract**

Disclosed in embodiments of the present application are an electrolyte, a lithium-ion battery, and an electric device. The electrolyte comprises a metal ion including at least one of K+, Rb+, and Cs+; and the molar concentration CM of the metal ion in the electrolyte satisfies: 0.03M ≤ CM. When applied in lithium-ion batteries, the electrolyte can effectively reduce the risk of lithium plating on the negative electrode and improve the safety performance of the lithium-ion batteries.

## Description

### CROSS-REFERENCE TO RELATED APPLICATIONS

This application claims the priority and benefit of Chinese Patent Application No. 202311523508.5, filed on November 15, 2023 and entitled "ELECTROLYTE, LITHIUM-ION BATTERY, AND ELECTRIC DEVICE", which is incorporated herein by reference in its entirety.

### TECHNICAL FIELD

This application relates to the field of battery technology, and in particular, to an electrolyte, a lithium-ion battery, and an electric device.

### BACKGROUND

In recent years, lithium-ion batteries have been widely applied in various fields such as energy storage systems for hydropower, thermal power, wind power, and solar power stations, as well as power tools, electric bicycles, electric motorcycles, electric vehicles, military equipment, aerospace, and the like, thereby achieving significant development.

With the widespread application of lithium-ion batteries, higher requirements have been imposed on safety of the lithium-ion batteries. Improving the safety of lithium-ion batteries is crucial for the development and application of the lithium-ion batteries.

### SUMMARY

This application is made in view of the above technical problems, aiming to provide an electrolyte, a lithium-ion battery, and an electric device. The electrolyte can effectively mitigate/alleviate lithium plating on the negative electrode plate, thereby enhancing safety of the lithium-ion battery.

According to a first aspect, an electrolyte is provided, where the electrolyte includes: metal ions, where the metal ions include at least one of K⁺, Rb⁺, and Cs⁺; where a molar concentration C_{M} of the metal ions in the electrolyte satisfies: 0.03 M≤C_{M}.

In embodiments of this application, an appropriate amount of free metal ions in the electrolyte can move to positions on a negative electrode plate with uneven current densities, where lithium plating easily occurs, forming electrostatic shielding or steric hindrance, thereby mitigating/alleviating lithium plating on the negative electrode plate during cycling of the lithium-ion battery, thus enhancing safety of the lithium-ion battery.

In a possible implementation, optionally, 0.03 M≤C_{M}≤0.25 M; and 0.05 M≤C_{M}≤0.15 M.

In embodiments of this application, metal ions with a molar concentration in the range of 0.03 M to 0.25 M can exist stably in ionic form in the electrolyte, thereby effectively mitigating/alleviating lithium plating on the negative electrode plate. Moreover, by controlling the concentration of metal ions to be within an appropriate range, the lithium-ion battery can also achieve a favorable capacity retention rate.

In a possible implementation, the metal ions exhibit electrochemical inertness within an operating voltage range of the lithium-ion battery.

In a possible implementation, the metal ions include K⁺.

In embodiments of this application, potassium ions having a Stokes radius smaller than that of lithium ions are selected as the metal ions, and potassium ions move faster than lithium ions to the positions on the negative electrode plate with uneven current densities, where lithium plating easily occurs, effectively homogenizing the current densities on the negative electrode plate and improving the efficiency of electrostatic shielding.

In a possible implementation, the electrolyte further includes lithium ions, where a molar concentration C_{Li} of the lithium ions in the electrolyte satisfies: 0.8 M≤C_{Li}≤1.2 M.

In a possible implementation, the electrolyte includes an inorganic salt, and the inorganic salt includes the metal ions and anions; where the anions include at least one of hexafluorophosphate, tetrafluoroborate, perchlorate, nitrate, carbonate, bis(trifluoromethanesulfonyl)imide, trifluoromethanesulfonate, difluoro(oxalato)borate, bis(oxalato)borate, methanesulfonate, and halogen anions.

In a possible implementation, the electrolyte includes a solvent, and the solvent includes a non-aqueous solvent, where the non-aqueous solvent includes a carbonate-based solvent.

In a possible implementation, the carbonate-based solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, and halogenated derivatives of the carbonates.

According to a second aspect, a lithium-ion battery is provided, where the lithium-ion battery includes the electrolyte according to any possible implementation of the first aspect.

In a possible implementation, a CB value of the lithium-ion battery satisfies: 1.03≤CB≤1.2, where the CB value is a ratio between a capacity of a negative electrode active material per unit area and a capacity of a positive electrode active material per unit area.

In embodiments of this application, the metal ions in the electrolyte of the lithium-ion battery can form electrostatic shielding or steric hindrance at a position with uneven current densities, where lithium plating easily occurs, thereby suppressing lithium plating. Considering that the electrostatic shielding of the metal ions may affect a electrochemical reaction rate at the positions, the CB value of the lithium-ion battery is set to be in the range of 1.03 to 1.2, meaning that a capacity of the negative electrode active material per unit area on the negative electrode plate is greater than a capacity of the positive electrode active material per unit area on the positive electrode plate, allowing the negative electrode plate to have more lithium-ion active sites per unit area to accommodate lithium ions that cannot intercalate into corresponding positions due to electrostatic shielding. In addition, a larger CB value means a stronger capacity to accommodate lithium ions of the negative electrode plate. Thus, the electrolyte containing metal ions in the lithium-ion battery and a high CB value together help further reduce the risk of lithium plating in the low CB region of the negative electrode plate, improving the safety of the lithium-ion battery.

In a possible implementation, the lithium-ion battery includes a negative electrode plate, and the negative electrode plate includes a negative electrode active material, where the negative electrode active material includes graphite.

According to a third aspect, an electric device is provided, where the electric device includes the lithium-ion battery according to any possible implementation of the second aspect.

### BRIEF DESCRIPTION OF DRAWINGS

To more clearly illustrate the technical solutions of the embodiments of this application, drawings for the embodiments of this application are briefly described below. It is clear that the drawings described below are merely some embodiments of this application, and persons of ordinary skill in the art can obtain other drawings based on these drawings without creative efforts.
FIG. 1 is a schematic diagram illustrating a principle of suppressing lithium plating in a lithium-ion battery;
FIG. 2 is a schematic diagram of a low CB region;
FIG. 3 is a schematic diagram of a battery cell;
FIG. 4 is a schematic diagram of a battery module;
FIG. 5 is a schematic diagram of a battery; and
FIG. 6 is another schematic diagram of a battery.

### DESCRIPTION OF EMBODIMENTS

Hereinafter, embodiments that specifically disclose the lithium-ion battery and electric device of this application are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily prolonging the following descriptions and to facilitate understanding by persons skilled in the art. Furthermore, the drawings and the following descriptions are provided for persons skilled in the art to fully understand this application and are not intended to limit the subject matter recited in the claims.

A "range" disclosed in this application is defined in the form of a lower limit and an upper limit, where a given range is defined by selecting a lower limit and an upper limit, and the selected lower limit and upper limit define the boundaries of a particular range. A range defined in this manner may include or exclude endpoints and may be arbitrarily combined, meaning any lower limit may be combined with any upper limit to form a range. For example, if ranges of 60-120 and 80-110 are listed for a particular parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, a numerical range "a-b" represents an abbreviated representation of a combination of any real numbers between a and b, where both a and b are real numbers. For example, the numerical range "0-5" means that all real numbers between "0-5" are listed herein, and "0-5" is merely an abbreviated representation of a combination of these numbers. Furthermore, when a parameter is expressed as an integer greater than or equal to 2, it is equivalent to disclosing that the parameter is, for example, an integer 2, 3, 4, 5, 6, 7, 8, 9, 10, 11, or 12.

In the descriptions of this application, it should be noted that, unless otherwise specified, "multiple" means two or more; the terms "upper", "lower", "left", "right", "inner", "outer", and the like indicate orientations or positional relationships merely for the convenience of describing this application and simplifying the description, rather than indicating or implying that the referenced device or element must have a specific orientation, be constructed, or be operated in a specific orientation, and thus should not be construed as limitations to this application. Furthermore, the terms "first", "second", "third", and the like are used for descriptive purposes only and should not be construed as indications or implications of relative importance.

Unless otherwise specified, in this application, the phrase "A and/or B" means "A, B, or both A and B". More specifically, any of the following conditions satisfies the condition "A and/or B": A is true (or present) and B is false (or absent); A is false (or absent) and B is true (or present); or both A and B are true (or present).

Unless otherwise specified, all steps in this application may be performed sequentially or randomly, preferably sequentially. For example, a method including steps (a) and (b) indicates that the method may include steps (a) and (b) performed sequentially, or steps (b) and (a) performed sequentially. For example, if it is mentioned that the method may further include step (c), it means that step (c) may be added to the method in any position, for example, the method may include steps (a), (b), and (c), or steps (a), (c), and (b), or steps (c), (a), and (b), or the like.

Unless otherwise specified, all embodiments and optional embodiments of this application may be combined with each other to form new technical solutions.

Unless otherwise specified, the following terms have the following meanings. Any undefined terms have their technically accepted meanings.

As mentioned, "Stokes radius" refers to the ratio of the drag coefficient to the particle radius when a particle moves as a Newtonian fluid in a fluid, also known as the effective radius of a particle in a solution or the solvated ion radius. A larger Stokes radius of a particle means a greater resistance for the particle when moving in the fluid, and a weaker migration capability.

As mentioned, "CB (Cell balance) value" refers to the ratio of a capacity ratio of a negative electrode and a positive electrode facing each other in a battery, also known as the N/P (Negative/Positive) ratio. In other words, the CB value equals the ratio of a capacity of a negative electrode active material per unit area to a capacity of a positive electrode active material per unit area.

As mentioned, "electrochemical inertness" refers to the property of not being electrochemically oxidized or reduced, or in other words, not undergoing electrochemical oxidation or reduction.

As mentioned, "non-aqueous solvent" refers to solvents other than water, such as an organic solvent, a supercritical fluid, an ionic liquid, and the like.

As mentioned, "carbonate-based solvent" refers to an organic solvent with a molecular structure containing a carbonate group (-OCO-O-), for example, a cyclic carbonate such as propylene carbonate (PC) and ethylene carbonate (EC), and a chain carbonate such as dimethyl carbonate (DMC), diethyl carbonate (DEC), and ethyl methyl carbonate (EMC).

The embodiments of this application are described below.

In recent years, secondary batteries have been widely applied in various fields such as power tools, electronic products, electric vehicles, and aerospace due to their high energy density and long service life, achieving significant development. Typically, a secondary battery includes a positive electrode plate, a negative electrode plate, an electrolyte, and a separator. During the charge and discharge of the battery, active ions intercalate and deintercalate back and forth between the positive electrode plate and the negative electrode plate. The electrolyte serves to conduct active ions between the positive electrode plate and the negative electrode plate. The separator is disposed between the positive electrode plate and the negative electrode plate, preventing short circuit between the positive electrode and negative electrode while allowing active ions to pass through, so that the electrochemical reactions of the secondary battery can proceed normally.

A lithium-ion battery is used as an example. A lithium-ion battery is a typical secondary battery. Due to its reliance on the chemical reactions of lithium ions intercalating and deintercalating between the positive electrode and negative electrode for charge and discharge, the lithium-ion battery is also known as rockingchair battery. During charge of a lithium-ion battery, lithium ions deintercalate from the positive electrode active material, move through the electrolyte, and intercalate into the negative electrode active material. During discharge, lithium ions deintercalate from the negative electrode active material, move through the electrolyte, and intercalate into the positive electrode active material.

It should be understood that the "lithium intercalation" or "intercalation" process described in this application refers to the process in which lithium ions intercalate into the positive electrode active material or negative electrode active material due to electrochemical reactions, and "extraction", "lithium deintercalation," or "deintercalation" process refers to the process in which lithium ions deintercalate from the positive electrode active material or negative electrode active material due to electrochemical reactions.

During production of the lithium-ion battery, a slurry containing an active material needs to be applied to a current collector to form an electrode plate. Due to limitations such as the coating methods and varying drying speeds of the slurry at different positions on the coated electrode plate, an electrode plate with completely uniform thickness usually cannot be obtained. This results in a certain region on the negative electrode plate having a specific capacity lower than that of a corresponding region on the positive electrode plate, causing the CB value in this region to be less than 1, that is, appearance of a low CB region in the lithium-ion battery. Additionally, during use of lithium-ion battery, factors such as uneven internal temperatures can lead to uneven current densities on the electrode plate. In a region corresponding to a low CB value or an area with a high current density on the negative electrode plate, the state of charge (SOC) of the negative electrode plate reaches saturation first, resulting in a more negative local electric field, which more easily attracts positively charged ions, such as lithium ions. Since the state of charge of this position is already saturated and more lithium ions for intercalation cannot be accommodated, lithium ions accumulate and plate out at this position, leading to lithium plating, affecting safety of the lithium-ion battery.

In view of this, this application provides an electrolyte, a lithium-ion battery, and an electric device, where the electrolyte includes metal ions capable of homogenizing current densities on the negative electrode plate. When applied to a lithium-ion battery, the electrolyte can reduce the risk of lithium plating on the negative electrode plate, thereby improving the safety of the lithium-ion battery.

Typically, a lithium-ion battery includes a positive electrode plate, a negative electrode plate, an electrolyte, and a separator. The lithium-ion battery provided by this application and components of the lithium-ion battery are described below.

### [Electrolyte]

The electrolyte conducts ions between the positive electrode plate and the negative electrode plate. A type of the electrolyte is not particularly limited in this application, and can be selected as needed. The electrolyte typically includes an electrolytic salt and a solvent.

First, this application provides an electrolyte, where the electrolyte includes metal ions, where the metal ions include at least one of K⁺, Rb⁺, and Cs⁺; and a molar concentration C_{M} of the metal ions in the electrolyte satisfies: 0.03 M≤C_{M}; optionally, 0.03 M≤C_{M}≤0.25 M; and optionally, 0.05 M≤C_{M}≤0.15 M.

Specifically, C_{M} may be 0.03 M, 0.04 M, 0.05 M, 0.06 M, 0.07 M, 0.08 M, 0.09 M, 0.1 M, 0.11 M, 0.12 M, 0.13 M, 0.14 M, 0.15 M, 0.15 M, 0.17 M, 0.18 M, 0.19 M, 0.2 M, 0.21 M, 0.22 M, 0.23 M, 0.24 M, 0.25 M, or a value within a range defined by any two of the above values. In another example, C_{M} may also be any value greater than or equal to 0.03 M.

In these embodiments of this application, the metal ions in the electrolyte can freely move to the negative electrode plate. As mentioned above, at a position corresponding to a low CB value on the negative electrode plate or an area with high current density on the negative electrode plate, the state of charge (SOC) of the negative electrode plate reaches saturation first, resulting in a more negative local electric field, which more easily attracts positively charged metal ions. The electrolyte in these embodiments of this application includes metal ions besides lithium ions, which can move to the aforementioned position and accumulate, forming electrostatic shielding and steric hindrance, preventing lithium ions from accumulating and plating out in this region. Thus, the metal ions can effectively homogenize the current densities on the negative electrode plate, suppress lithium plating, and help improve the safety of the lithium-ion battery.

Furthermore, by controlling the concentration of metal ions within the range of 0.03 M to 0.25 M, the impact of metal ions on a viscosity of the electrolyte can be reduced, thereby reducing the impact of metal ions on a direct current resistance of the lithium-ion battery, achieving a favorable capacity retention rate while mitigating lithium plating.

In an embodiment, the metal ions exhibit electrochemical inertness within an operating voltage range of the lithium-ion battery. It should be understood that whether the metal ions exhibit electrochemical inertness is related to various factors, such as the concentration of the metal ions, the type of metal ions, the influence of other substances in the electrolyte (such as electrolytic salt and solvent), a voltage of the lithium-ion battery, and the like.

In embodiments of this application, the operating voltage range of the lithium-ion battery is typically 3.0 V to 4.2 V, and metal ions with a concentration range of 0.03 M to 0.25 M can stably exist in ionic form in the electrolyte within this voltage range, thereby mitigating/alleviating lithium plating.

In an embodiment, the metal ions are K⁺.

Specifically, the Stokes radius of lithium ions is typically 4.8 Å, while the Stokes radius of potassium ions is typically 3.6 Å. The smaller Stokes radius of potassium ions compared to that of lithium ions allows them to have a faster migration rate in the electrolyte. Thus, potassium ions can move more quickly to the position corresponding to low CB value on the negative electrode plate or area with high local current density on the negative electrode plate, rapidly forming electrostatic shielding and steric hindrance, thereby mitigating/alleviating lithium plating on the negative electrode plate and helping to enhance the safety of the lithium-ion battery.

In an embodiment, the electrolyte further includes lithium ions, where a molar concentration C_{Li} of the lithium ions in the electrolyte satisfies: 0.8 M≤C_{Li}≤1.2 M.

Specifically, C_{Li} may be 0.8 M, 0.81 M, 0.82 M, 0.83 M, 0.84 M, 0.85 M, 0.86 M, 0.87 M, 0.88 M, 0.89 M, 0.9 M, 0.91 M, 0.92 M, 0.93 M, 0.94 M, 0.95 M, 0.96 M, 0.97 M, 0.98 M, 0.99 M, 1 M, 1.11 M, 1.12 M, 1.13 M, 1.14 M, 1.15 M, 1.16 M, 1.17 M, 1.18 M, 1.19 M, 1.2 M, or a value within a range defined by any two of the above values.

In embodiments of this application, the concentration of lithium ions is controlled to be within the range of 0.8 M to 1.2 M, and with the concentration of metal ions controlled to be within the range of 0.03 M to 0.25 M, the metal ions can stably exist in ionic form in the electrolyte during cycling of the lithium-ion battery, homogenizing current density, suppressing lithium plating on the negative electrode plate, and helping to enhance the safety of the lithium-ion battery.

In an embodiment, the electrolyte includes an inorganic salt, where the inorganic salt includes metal ions and anions, and the anions include at least one of hexafluorophosphate ions, acetate ions, nitrate ions, and halogen ions.

Specifically, metal ions can be introduced by adding an inorganic salt to the electrolyte.

In an embodiment, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In an embodiment, the solvent includes a non-aqueous solvent, where the non-aqueous solvent includes a carbonate-based solvent. Optionally, the carbonate-based solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, and a halogenated derivative of the foregoing carbonates.

In another embodiment, the solvent may further include at least one of methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In an embodiment, the electrolyte may further include an additive, where the additive may include a negative electrode film-forming additive and a positive electrode film-forming additive, and may further include an additive capable of improving certain performance of the lithium-ion battery, such as an additive for improving overcharge performance of the lithium-ion battery, and an additive for improving high-temperature performance or low-temperature performance of the lithium-ion battery.

### [Negative electrode plate]

The negative electrode plate typically includes a negative electrode current collector and a negative electrode film layer disposed on at least one surface of the negative electrode current collector. The negative electrode film layer includes a negative electrode active material.

For example, the negative electrode current collector has two opposite surfaces in a thickness direction of the negative electrode current collector, and the negative electrode film layer is disposed on either or both of the two opposite surfaces of the negative electrode current collector.

In an embodiment, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (such as copper, copper alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), and polyethylene (PE)).

In an embodiment, the negative electrode active material may be a negative electrode active material known in the art for batteries. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and other conventional materials that can be used as negative electrode active materials for batteries may alternatively be used. These negative electrode active materials may be used alone or in combination of two or more.

In an embodiment, the negative electrode film layer further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methacrylic acid) (PMAA), and carboxymethyl chitosan (CMCS).

In an embodiment, the negative electrode film layer further includes a conductive agent. The conductive agent may be selected from at least one of superconducting carbon, acetylene black, carbon black, Ketjen black, carbon dots, carbon nanotubes, graphene, and carbon nanofibers.

In an embodiment, the negative electrode film layer further includes other additives, such as a thickener (for example, sodium carboxymethyl cellulose (CMC-Na)).

In an embodiment, the negative electrode plate may be prepared as follows: the components for preparing the negative electrode plate are formed into a negative electrode slurry. For example, the negative electrode active material, conductive agent, binder, and any other components are dispersed in a solvent (for example, N-methylpyrrolidone) to form a negative electrode slurry. The negative electrode slurry is then applied to the negative electrode current collector, and after drying, cold pressing, and other processes, the negative electrode plate is obtained.

### [Positive electrode plate]

The positive electrode plate includes a positive electrode current collector and a positive electrode film layer disposed on at least one surface of the positive electrode current collector, where the positive electrode film layer includes a positive electrode active material.

For example, the positive electrode current collector has two opposite surfaces in a thickness direction of the positive electrode current collector, and the positive electrode film layer is disposed on either or both of the two opposite surfaces of the positive electrode current collector.

In an embodiment, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (such as aluminum, aluminum alloy, nickel, nickel alloy, titanium, titanium alloy, silver, or silver alloy) on a polymer material substrate (such as a substrate of polypropylene (PP), polyethylene terephthalate (PET), polybutylene terephthalate (PBT), polystyrene (PS), and polyethylene (PE)).

In an embodiment, the positive electrode active material may be a positive electrode active material known in the art for batteries. For example, the positive electrode active material may include at least one of the following materials: an olivine-structure lithium-containing phosphate, lithium transition metal oxide, and their respective modified compounds. However, this application is not limited to these materials, and other conventional materials that can be used as positive electrode active materials for batteries may alternatively be used. These positive electrode active materials may be used alone or in combination of two or more. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel manganese cobalt oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.1}Al_{0.05}O₂), and their modified compounds. Examples of the olivine-structure lithium-containing phosphate may include, but are not limited to, at least one of lithium iron phosphate (for example, LiFePO₄ (also referred to as LFP)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. During charge and discharge of the battery, Li intercalation and consumption occur, and a molar content of Li in the positive electrode active material varies at different discharge states of the battery. In the examples of the positive electrode active material in this application, the molar content of Li refers to an initial state of the material, that is, a pre-doping state. When the positive electrode active material is applied in a battery system, after chargedischarge cycles, the molar content of Li changes. In the examples of the positive electrode active material in this application, a molar content of O is merely an ideal value, but lattice oxygen release may cause variations in the molar content of O, leading to variations in an actual molar content of O.

In an embodiment, the positive electrode film layer further includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In an embodiment, the positive electrode film layer further includes a conductive agent. For example, the conductive agent may include at least one of superconducting carbon, acetylene black, carbon black, Ketjen black, carbon dots, carbon nanotubes, graphene, and carbon nanofibers.

In an embodiment, the positive electrode plate may be prepared as follows: the components for preparing the positive electrode plate are formed into a positive electrode slurry. For example, the first positive electrode active material and/or the second positive electrode active material, conductive agent, binder, and any other components are dispersed in a solvent (for example, N-methylpyrrolidone) to form a positive electrode slurry. The positive electrode slurry is then applied to the positive electrode current collector, and after drying, cold pressing, and other processes, the positive electrode plate is obtained.

### [Separator]

In an embodiment, the battery further includes a separator. A type of the separator is not particularly limited in this application, and any known porousstructure separator with good chemical and mechanical stability may be used.

In an embodiment, a material of the separator may be selected from at least one of glass fiber, non-woven fabric, polyethylene, polypropylene, and polyvinylidene fluoride. The separator may be a single-layer film or a multilayer composite film. This is not particularly limited. When the separator is a multilayer composite film, materials of the layers may be the same or different. This is not particularly limited.

The above describes the components of the lithium-ion battery provided by this application. The lithium-ion battery involved in this application is described below.

### [Lithium-ion battery]

This application further provides a lithium-ion battery, where the lithium-ion battery includes the electrolyte according to any of the foregoing embodiments.

By introducing the electrolyte of the embodiments of this application into the lithium-ion battery, the metal ions in the electrolyte can homogenize the current densities on the surface of the negative electrode plate during cycling of the lithium-ion battery, suppressing lithium plating and thereby enhancing the safety of the lithium-ion battery.

In an embodiment, the CB value of the lithium-ion battery satisfies: 1.03≤CB≤1.2, where the CB value is the ratio of the capacity of the negative electrode active material per unit area to the capacity of the positive electrode active material per unit area.

Specifically, in design of the electrode plate, the CB value of the lithium-ion battery can be controlled to be within the range of 1.03 to 1.2 by using a negative electrode active material with a higher capacity to increase a loading amount of the active material on the negative electrode plate, or by using another method. The CB value may be 1.03, 1.04, 1.06, 1.08, 1.1, 1.12, 1.14, 1.16, 1.18, 1.2, or a value within a range defined by any two of the above values.

On one hand, a CB value greater than 1 means that the capacity of the negative electrode active material per unit area is greater than the capacity of the positive electrode active material per unit area, providing more lithium-ion active sites on the negative electrode plate, mitigating the situation where lithium ions cannot intercalate into the negative electrode active material and cause lithium plating. On the other hand, an excessively large CB value results in more lithium ions participating in the formation of the SEI film during formation of the lithium-ion battery, which is detrimental to the first-cycle coulombic efficiency of the lithium-ion battery.

In this application, controlling the CB value of the lithium-ion battery to be within the range of 1.03 to 1.2 enables the lithium-ion battery to achieve good coulombic efficiency while further reducing the risk of lithium plating on the negative electrode plate.

It should be understood that, although the CB value of the lithium-ion battery is designed to be 1.03≤CB≤1.2, as mentioned above, due to limitations in process and manufacturing, a low CB region with CB less than 1 is inevitable in the lithium-ion battery. The region corresponding to a low CB value on the negative electrode plate has a higher current density, and is more prone to lithium plating during cycling of the lithium-ion battery.

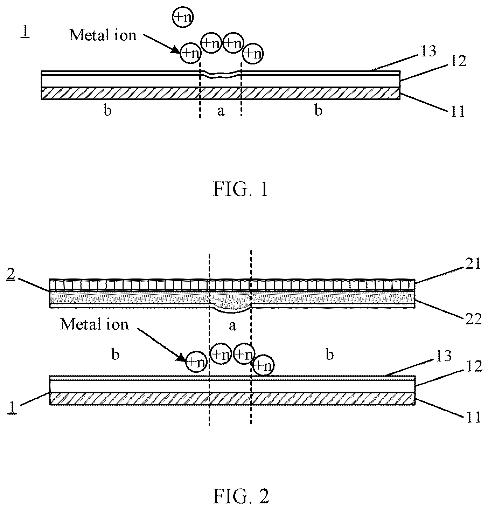

FIG. 1 is a schematic diagram illustrating a principle of suppressing lithium plating in a lithium-ion battery according to an embodiment of this application.

As shown in FIG. 1, the negative electrode plate 1 includes a negative electrode current collector 11 and a negative electrode active material layer 12 disposed on the negative electrode current collector 11. After formation of the lithium-ion battery, the negative electrode plate 1 further includes a solid electrolyte interface (Solid electrolyte interface, SEI) film 13 formed on a surface of the negative electrode active material layer 12. Region a is a region corresponding to a low CB value on the negative electrode plate, and region b is another region outside the low CB region.

In the embodiments of this application, the metal ions in the electrolyte can move to the region corresponding to a low CB value on the negative electrode plate or an area with a high current density on the negative electrode plate, forming electrostatic shielding and steric hindrance, preventing lithium ions from accumulating and plating out at these positions, thereby suppressing lithium plating. Additionally, the CB value of the lithium-ion battery is designed to be 1.03 to 1.2, meaning that a CB value in region b can reach 1.03 to 1.2, helping to accommodate lithium ions that cannot be accommodated in the region corresponding to the low CB value, further reducing the risk of lithium plating.

It should be understood that to design the CB value of the lithium-ion battery to be 1.03 to 1.2, appropriate positive and negative electrode active materials may be used to achieve a desired specific capacity, or coating weights of the positive and negative electrode plates may be controlled, or other methods may be used. After the lithium-ion battery is assembled, a CB value is a fixed value. Due to factors such as manufacturing processes, CB values of different lithium-ion batteries may vary, so the CB value of the lithium-ion battery is designed to be within a range, that is, 1.03 to 1.2. Additionally, due to limitations in the coating process, even if the CB value is designed to be 1.03 to 1.2, a low CB region with a CB value less than 1 may still appear locally.

The low CB region a in FIG. 1 is merely an example of a low CB region, indicating a case where an uneven thickness of the negative electrode active material layer 12 on the negative electrode plate 1 results a low CB region a at this position. FIG. 2 shows another example of forming a low CB region a.

The positive electrode plate 2 includes a positive electrode current collector 21 and a positive electrode active material layer 22 disposed on the positive electrode current collector 21. When the thickness of the negative electrode active material layer 12 is uniform, a thicker positive electrode active material layer 22 may also result in a low CB region a at this position.

In another possible scenario, the thicknesses of the positive electrode active material layer and the negative electrode active material layer are uneven at a certain position, for example, the positive electrode active material layer is thicker while the negative electrode active material layer is thinner, which may also result in a low CB region a at this position.

In an embodiment, the negative electrode plate, positive electrode plate, and separator may be formed into an electrode assembly through winding or lamination.

In an embodiment, the battery cell of the lithium-ion battery includes an outer packaging. The outer packaging may be used to encapsulate the electrode assembly and the electrolyte.

In an embodiment, the outer packaging of the battery cell of the lithium-ion battery may be a hard shell, such as a hard plastic shell, aluminum shell, or steel shell. The outer packaging of the battery cell may also be a soft pack, such as a soft pouch. A material of the soft pouch may be plastic. Examples of plastic include polypropylene, polybutylene terephthalate, and polybutylene succinate.

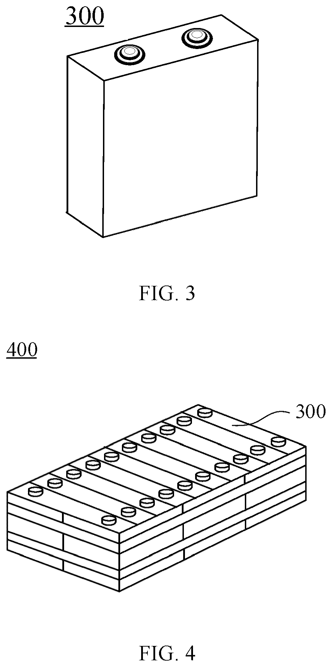

A shape of the battery cell of the lithium-ion battery is not particularly limited in this application, and may be cylindrical, prismatic, or any other shape. For example, FIG. 3 is an example prismatic battery cell 300 of a lithium-ion battery.

FIG. 4 is an example battery module 400. Refer to FIG. 4. In the battery module 400, multiple battery cells 300 may be sequentially arranged along a length direction of the battery module 400. Certainly, the cells may alternatively be arranged in any other manner. Further, the multiple battery cells 300 may be fixed by fasteners. The multiple battery cells 300 may be battery cells 300 of the same chemical system or different chemical systems.

Optionally, in an embodiment, the battery module 400 may further include a housing with an accommodating space, and the multiple battery cells 300 are accommodated in the accommodating space.

Optionally, in an embodiment, the above battery module 400 may be assembled into a battery, and one or more battery modules 400 may be included in the battery. A specific quantity may be determined by persons skilled in the art based on application and capacity of the battery.

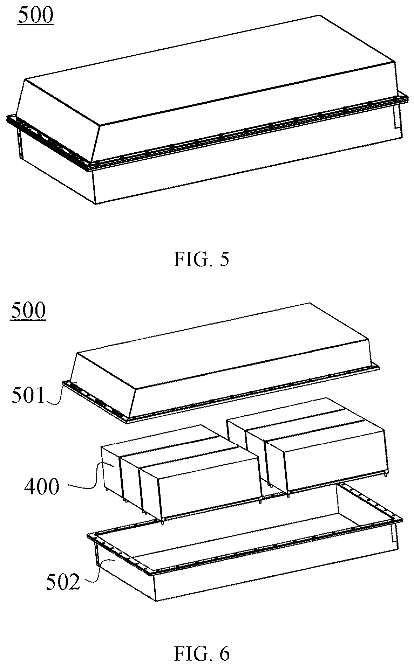

FIG. 5 and FIG. 6 are an example battery pack 500 of lithium-ion battery. Refer to FIG. 5 and FIG. 6. The battery pack 500 may include a battery box and multiple battery modules 400 disposed in the battery box. The battery box includes an upper box body 501 and a lower box body 502, where the upper box body 501 can cover the lower box body 502 to form an enclosed space for accommodating the battery modules 400. The multiple battery modules 400 may be arranged in the battery box in any manner.

It should be understood that the battery cells 300 may first form a battery module 400, and the battery pack 500 is formed by battery modules 400. Alternatively, the battery pack 500 may be directly formed by battery cells 300, and the intermediate form of the battery module 400 is not needed.

Additionally, this application further provides an electric device, where the electric device includes the lithium-ion battery according to the foregoing embodiments.

In another embodiment, the electric device includes at least one of the battery cell 300, battery module 400, or battery pack 500 provided by this application. The battery cell 300, battery module 400, or battery pack 500 may be used as a power source or an energy storage unit for the electric device. The electric device may include, but is not limited to, mobile devices (such as mobile phones and laptops), electric vehicles (such as pure electric vehicles, hybrid electric vehicles, plug-in hybrid electric vehicles, electric bicycles, electric scooters, electric golf carts, and electric trucks), electric trains, ships, and satellites, energy storage systems, and the like.

As an electric device, a quantity of battery cells 300, battery modules 400, or battery packs 500 can be determined based on use requirements.

An example of an electric device is a pure electric vehicle, a hybrid electric vehicle, or a plug-in hybrid electric vehicle. To satisfy requirements for a high power and high energy density of secondary batteries of such electric devices, a battery pack or battery module may be used.

Another example device may be a mobile phone, tablet computer, laptop, or the like. Such device typically needs to be light and may use a secondary battery as a power source.

The following describes examples of this application. The examples described below are illustrative and are only used to explain this application, and should not construed as limitations to this application. Where specific techniques or conditions are not specified in the examples, they are performed according to the techniques or conditions described in the literature in the field or according to product specifications. Reagents or instruments used without specifying the manufacturer are conventional products commercially available.

### [Examples 1 to 15 and Comparative examples 1 and 2]

### Example 1

### (1) Preparation of negative electrode plate

Artificial graphite (1 kg) as a negative electrode active material, acetylene black (10 g) as a conductive agent, styrene-butadiene rubber (30 g) as a binder, and sodium carboxymethyl cellulose (20 g) as a thickener were dissolved in deionized water (1 kg) as a solvent, and mixed uniformly to obtain a negative electrode slurry. The negative electrode slurry was then uniformly applied to a copper foil as a negative electrode current collector. After drying, rolling, and slitting, the negative electrode plate was obtained.

A loading amount of the negative electrode active material on the negative electrode plate can be controlled by adjusting a thickness of the applied slurry, so as to control a CB value of the negative electrode plate. For example, coating amounts of the positive electrode slurry and negative electrode slurry in a coating device can be controlled, so that after coating of the negative electrode plate, an area corresponding to a low CB region on the negative electrode plate accounts for 10% of an area of the negative electrode plate, with CB'=0.9 for the low CB region and CB=1.1 for the other regions.

It should be understood that in the examples and comparative examples, controlling the area corresponding to the low CB region on the negative electrode plate to account for 10% of the area of the negative electrode plate is only for verifying the effects of the examples and does not constitute a limitation to the low CB region in lithium-ion batteries. In other words, a low CB region may not necessarily exist in lithium-ion batteries, and the area corresponding to the low CB region on the negative electrode plate may not necessarily account for 10% of the area of the negative electrode plate.

### (2) Preparation of positive electrode plate

LiNi₅Co₂Mn₃O₂ (1 kg) as a positive electrode active material, carbon nanotubes (20 g) as the conductive agent, and polyvinylidene fluoride (20 g) as a binder were dissolved in N-methylpyrrolidone (1 kg) as the solvent, and mixed uniformly to obtain a positive electrode slurry. The positive electrode slurry was then uniformly applied to a positive electrode current collector aluminum foil. After drying, rolling, and slitting, the positive electrode plate was obtained.

### (3) Preparation of electrolyte

In an argon atmosphere glovebox (H₂O<0.1 ppm and O₂<0.1 ppm), the electrolyte was prepared: organic solvents ethylene carbonate (EC), dimethyl carbonate (DMC), and diethyl carbonate (DEC) were mixed uniformly in a volume ratio of 1:1:1, then 1 M lithium hexafluorophosphate (LiPF₆) was added, followed by the addition of potassium hexafluorophosphate (KPF₆) as an additive to achieve C_{M}=0.1 M and C_{Li}=1 M. A mixture was stirred uniformly to obtain the electrolyte.

### (4) Preparation of lithium-ion battery

The positive electrode plate, separator, and negative electrode plate were stacked sequentially, with the separator positioned between the positive electrode plate and the negative electrode plate to separate the positive electrode plate and the negative electrode plate. The stacked components were then wound and placed in a housing. After drying, the electrolyte was injected to obtain the lithium-ion battery of Example 1.

The above battery underwent formation under the following specific conditions: a LAND testing system was used; and the positive electrode and negative electrode were connected, left standing for 1 minute, charged at a constant current of 0.1 C to 4.2 V, and then charged at a constant voltage of 4.2 V until a cutoff current was 0.05 C. A cumulative charge capacity X₁ of the process was recorded. The positive electrode and negative electrode were left standing for 10 minutes, discharged at a constant current of 0.1 C with a cutoff voltage of 2.5 V, and a discharge capacity X₂ was recorded. The positive electrode and negative electrode were left standing for 48 hours.

Thus, for the prepared lithium-ion battery of Example 1, CB=1.1, CB'=0.9, the metal ions in the electrolyte were K⁺, a molar concentration C_{M} of K⁺ in the electrolyte was 0.1 M, and a molar concentration C_{Li} of Li⁺ in the electrolyte was 1 M.

### Example 2

Compared with Example 1, in the electrolyte in Example 2, C_{M}=0.03 M.

### Example 3

Compared with Example 1, in the electrolyte in Example 3, C_{M}=0.05 M.

### Example 4

Compared with Example 1, in the electrolyte in Example 4, C_{M}=0.15 M.

### Example 5

Compared with Example 1, in the electrolyte in Example 5, C_{M}=0.2 M.

### Example 6

Compared with Example 1, in the electrolyte in Example 6, C_{M}=0.25 M.

### Example 7

Compared with Example 1, in the electrolyte in Example 7, lithium hexafluorophosphate (CsPF₆) was added, and metal ions were Cs⁺, and C_{M}=0.1 M.

### Example 8

Compared with Example 1, in the electrolyte in Example 8, CsPF₆ and KPF₆ were added, the metal lithium ions in the electrolyte were K⁺ and Cs⁺, and concentrations of both metal ions in the electrolyte were C_{M}=0.1 M.

### Example 9

Compared with Example 1, in the electrolyte in Example 9, C_{Li}=0.8 M.

### Example 10

Compared with Example 1, in the electrolyte in Example 10, C_{Li}=1.2 M.

### Example 11

Compared with Example 1, in the lithium-ion battery in Example 11, CB=1.03.

### Example 12

Compared with Example 1, in the lithium-ion battery in Example 12, CB=1.2.

### Example 13

Compared with Example 1, in the lithium-ion battery in Example 13, CB=1.3.

### Example 14

Compared with Example 1, in the lithium-ion battery in Example 14, CB'=0.8.

### Example 15

Compared with Example 1, in the lithium-ion battery in Example 15, CB'=0.95.

### Comparative example 1

Compared with Example 1, in the electrolyte in Comparative example 1, the aforementioned metal ions were not included.

### Comparative example 2

Compared with Example 1, in the electrolyte in Comparative example 2, C_{M}=0.01 M.

From performance tests on the batteries in the examples and comparative examples, data in Table 1 was obtained, with specific test methods described below.

Product parameters of Examples 1 to 15 and Comparative examples 1 and 2.

**Table 1: Product and performance parameters of Examples 1 to 15 and Comparative examples 1 and 2**

| | Metal ions | C_{M} (M) | C_{Li} (M) | CB | CB' | S | ICE | Capacity retention rate |
|---|---|---|---|---|---|---|---|---|
| Example 1 | K⁺ | 0.1 | 1 | 1.1 | 0.9 | 7% | 90.4% | 82.0% |
| Example 2 | K⁺ | 0.03 | 1 | 1.1 | 0.9 | 46% | 90.8% | 88.0% |
| Example 3 | K⁺ | 0.05 | 1 | 1.1 | 0.9 | 18% | 90.3% | 84.6% |
| Example 4 | K⁺ | 0.15 | 1 | 1.1 | 0.9 | ~0% | 90.2% | 78.7% |
| Example 5 | K⁺ | 0.2 | 1 | 1.1 | 0.9 | ~0% | 90.4% | 70.1% |
| Example 6 | K⁺ | 0.25 | 1 | 1.1 | 0.9 | ~0% | 89.9% | 62.3% |
| Example 7 | Cs⁺ | 0.1 | 1 | 1.1 | 0.9 | 18% | 91.0% | 79.4% |
| Example 8 | K⁺&Cs⁺ | 0.1&0.1 | 1 | 1.1 | 0.9 | 0% | 90.6% | 72.4% |
| Example 9 | K⁺ | 0.1 | 0.8 | 1.1 | 0.9 | 5% | 90.3% | 71.17% |
| Example 10 | K⁺ | 0.1 | 1.2 | 1.1 | 0.9 | 13% | 90.4% | 76.3% |
| Example 11 | K⁺ | 0.1 | 1 | 1.03 | 0.9 | 37% | 91.8% | 80.9% |
| Example 12 | K⁺ | 0.1 | 1 | 1.2 | 0.9 | 8% | 89.5% | 83.1% |
| Example 13 | K⁺ | 0.1 | 1 | 1.3 | 0.9 | ~0% | 86.5% | 83.2% |
| Example 14 | K⁺ | 0.1 | 1 | 1.1 | 0.8 | 52% | 90.7% | 81.5% |
| Example 15 | K⁺ | 0.1 | 1 | 1.1 | 0.95 | ~0% | 90.0% | 81.7% |
| Comparative example 1 | / | / | 1 | 1.1 | 0.9 | 90% | 90.2% | 89.5% |
| Comparative example 2 | K⁺ | 0.01 | 1 | 1.1 | 0.9 | 88% | 90.1% | 89.1% |

In Table 1, "metal ions" refers to the metal ions added to the electrolyte, "CB" refers to the CB value corresponding to regions other than the low CB region in the lithium-ion battery, "CB'" refers to the CB value corresponding to the low CB region in the lithium-ion battery, "C_{M}" refers to the molar concentration of metal ions in the electrolyte, "C_{Li}" refers to the molar concentration of lithium ions in the electrolyte, "ICE" refers to the first-cycle coulombic efficiency of the lithium-ion battery, "capacity retention rate" refers to the capacity retention rate obtained after testing the lithium-ion battery for capacity retention rate, and "S" refers to the percentage of an area of the lithium plating region on the negative electrode plate relative to the area of the negative electrode plate region corresponding to the low CB region after the lithium-ion battery undergoes the capacity retention test and is fully charged and then disassembled.

From the examples and comparative examples in Table 1, it can be learned that by introducing metal ions with a molar concentration of 0.03 M or higher into the electrolyte, the examples all exhibit smaller S values, indicating that the examples can effectively suppress lithium plating in corresponding low CB region in the negative electrode plate, while the comparative examples exhibit larger S values, indicating that the absence of metal ions or an excessively low concentration of metal ions in the electrolyte cannot suppress lithium plating in corresponding low CB region in negative electrode plate. This demonstrates that metal ions can stably exist in the electrolyte and freely move to positions on the negative electrode plate with uneven current densities, where lithium plating easily occur, forming electrostatic shielding or steric hindrance, thereby effectively mitigating/alleviating lithium plating on the negative electrode plate and enhancing the safety of the lithium-ion battery.

From the comparative analysis of Examples 1 to 6, it can be learned that as the molar concentration of metal ions in the electrolyte increases, the S value decreases, with the S values of Examples 4 to 6 approaching 0%, indicating that higher concentrations of metal ions have a better effect on suppressing lithium plating. On the other hand, as the concentration of metal ions increases, the capacity retention rate of the lithium-ion battery decreases. The concentration of metal ions has a certain impact on the direct current resistance (DCR) of the lithium-ion battery. A higher concentration leads to a higher DCR, resulting in a lower capacity retention rate of the lithium-ion battery. This indicates that by controlling the concentration of metal ions to be within the range of 0.03 M to 0.25 M, lithium plating can be suppressed and a favorable capacity retention rate of the lithium-ion battery can be achieved.

From the comparative analysis of Examples 1, 7, and 8, it can be learned that, in addition to potassium ions, the metal ions in the electrolyte may alternatively be cesium ions or a combination of potassium and cesium ions, which can also effectively suppress lithium plating, achieving a similar effect. When other conditions are identical, the S value of Example 1 is lower than the S value of Example 7, indicating that potassium ions are more effective at suppressing lithium plating, demonstrating that potassium ions, due to their smaller Stokes radius, can move more quickly to the negative electrode plate region corresponding to the low CB value or the area with high current density, forming electrostatic shielding or steric hindrance, thereby better homogenizing current densities and suppressing lithium plating.

From the comparative analysis of Examples 1, 9, and 10, it can be learned that, with the concentration of metal ions in the electrolyte remaining unchanged, a higher concentration of lithium ions in the electrolyte means a larger S value, in other words, the suppression of lithium plating by metal ions weakens as the concentration of lithium ions increases. This indicates that the concentration of metal ions in the electrolyte and the corresponding concentration of lithium ions can be designed accordingly. For example, in an electrolyte with a higher lithium ion concentration, increasing the concentration of metal ions can achieve better mitigation/suppression of lithium plating.

From the comparative analysis of Examples 1 and 11 to 13, it can be learned that as the CB value of the lithium-ion battery increases, the S value decreases, with the S value of Example 13 approaching 0. This indicates that, with a constant concentration of metal ions, a larger CB value results in better mitigation/suppression of lithium plating. This further demonstrates that metal ions and a high CB value together help to further mitigate/suppress lithium plating, improving the safety and charge performance of the lithium-ion battery. On the other hand, as the CB value of the lithium-ion battery increases, the ICE of the lithium-ion battery decreases, indicating that the CB value of the lithium-ion battery should not be designed to be excessively large. This indicates that by controlling the CB value of the lithium-ion battery within a larger range, with an appropriate concentration of metal ions, effective suppression of lithium plating can be achieved while maintaining a favorable ICE for the lithium-ion battery.

From the comparative analysis of Examples 1, 14, and 15, it can be learned that, regardless of the CB value in the low CB region, metal ions can mitigate/suppress lithium plating in the negative electrode plate corresponding to the region. Moreover, with a constant concentration of metal ions, a higher CB value of the low CB region means a lower S value. This indicates that a higher CB value in the low CB region allows more lithium ions to be accommodated in that region, helping to reduce lithium ions that cannot intercalate into the negative electrode, that is, reducing lithium ions that can accumulate and plate out, resulting in a lower S value. It should be understood that the CB' in the examples and comparative examples was artificially set to verify experimental effects. In actual production, a low CB region occurs due to limitations in processing and manufacturing, and a specific CB value may not be artificially controlled, but an area of the low CB region can be measured through testing methods. Thus, the concentration of metal ions in the electrolyte can also be adjusted based on a size of the low CB region in the lithium-ion battery. For example, in a lithium-ion battery with a larger low CB region, the concentration of metal ions can be appropriately increased.

The following briefly describes the methods for testing the physicochemical and performance parameters in the examples of this application. It should be understood that the following test methods are merely examples, and other test methods known in the art may also be used.

### 1. CB value test method

According to the examples of this application, a reversible capacity of the negative electrode was determined through the following steps: a negative electrode plate with one side coated was cut into a disc with a 14 mm diameter. A coin cell was assembled with the prepared electrolyte in a glovebox, with a lithium metal disc used as a counter electrode; left standing at 25°C for 6 h; discharged at a constant current of 0.1 C to 5 mV; then discharged at a constant current of 0.01 C to 5 mV; left standing for 5 min; and charged at a constant current of 0.1 C to 0.7 V. A charge capacity was recorded as Ca, measured in mAh.

According to the examples of this application, the reversible capacity of the positive electrode can be determined through the following steps: a positive electrode plate with one side coated was cut into a disc with a 14 mm diameter. A coin cell was assembled with the prepared electrolyte in a glovebox, with a lithium metal disc used as a counter electrode; left standing at 25°C for 6 h; charged at a constant current of 0.1 C to 4.25 V; then charged at a constant current of 0.05 C to 4.25 V; left standing for 5 min; and discharged at a constant current of 0.1 C to 2.8 V. A discharge capacity was recorded as Cc, measured in mAh.

The CB value of the battery can be calculated according to the formula CB=Ca/Cc, where Ca was the charge capacity tested in the negative electrode reversible capacity test, and Cc was the discharge capacity tested in the positive electrode reversible capacity test.

It should be understood that on both the positive electrode plate and the negative electrode plate, a capacity of a specified region can be individually measured to calculate a CB value of the specified region. In a region where the CB value was less than 1, lithium plating occurred on the negative electrode plate in the test. Therefore, by testing the capacities of the positive electrode plate and negative electrode plate and observing where lithium plating occurred on the negative electrode plate, the corresponding low CB region can be identified, and an area of the low CB region can be calculated through fitting.

### 2. Molar concentration test method

The molar concentration of metal ions in the electrolyte can be determined by using various methods such as titration, electrochemical analysis, spectrophotometry, and inductively coupled plasma.

For example, the ICP (Inductively coupled plasma, inductively coupled plasma) test method was as follows: the sample was digested with aqua regia (concentrated hydrochloric acid:concentrated nitric acid=3: 1) or reverse aqua regia (concentrated nitric acid:concentrated hydrochloric acid=3:1), and element amounts were measured with an ICP tester.

### 3. Method for testing first-cycle coulombic efficiency of lithium-ion battery

As mentioned in the foregoing descriptions, during formation of the lithium-ion battery, a charge capacity X₁ and discharge capacity X₂ of the lithium-ion battery were recorded, and the first-cycle coulombic efficiency of the lithium-ion battery was ICE=X₂/X₁×100%.

### 4. Capacity retention rate test

A LAND testing system was used. The formed lithium-ion battery was left standing for 10 min; then charged at a constant current of 0.33 C with a cutoff voltage of 4.2 V; charged at a constant voltage of 4.2 V until the cutoff current was 0.05 C; then left standing for 10 min; and discharged at a constant current of 0.1 C with a cutoff voltage of 2.5 V. A current discharge capacity was recorded as Y1. The battery was left standing for 10 min; then charged at a constant current of 0.33 C with a cutoff voltage of 4.2 V; charged at a constant voltage of 4.2 V until the cutoff current was 0.05 C; then left standing for 10 min; and discharged at a constant current of 4 C with a cutoff voltage of 2.5 V. A current discharge capacity was recorded as Y2. The capacity retention rate of the lithium-ion battery equaled Y₂/Y₁×100%.

### 5. Lithium plating test

After the capacity retention rate test, the lithium-ion battery was left standing for 10 min; then charged at a constant current of 0.33 C with a cutoff voltage of 4.2 V; and charged at a constant voltage of 4.2 V until the cutoff current was 0.05 C. The fully charged lithium-ion battery was disassembled, and the negative electrode plate corresponding to the low CB region was observed for lithium plating. A percentage S of an area of the lithium plating region relative to an area of the negative electrode plate region corresponding to the low CB region was calculated through fitting. Alternatively, the disassembled negative electrode plate was photographed. A graphite region was golden yellow and the lithium plating region was silver on the negative electrode plate. By using a computer to identify color differences, a ratio between an area of the silver region and the area corresponding to the low CB region was obtained, and then the lithium plating area percentage S can be calculated.

Although this application is described with reference to preferred embodiments, various improvements can be made, and components therein can be replaced with equivalents without departing from the scope of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. An electrolyte, **characterized in that** the electrolyte comprises:
metal ions, wherein the metal ions comprise at least one of K⁺, Rb⁺, and Cs⁺; wherein
a molar concentration C_{M} of the metal ions in the electrolyte satisfies: 0.03 M≤C_{M}.

2. The electrolyte according to claim 1, **characterized in that** 0.03 M≤C_{M}≤0.25 M; and optionally, 0.05 M≤C_{M}≤0.15 M.

3. The electrolyte according to claim 1 or 2, **characterized in that** the metal ions exhibit electrochemical inertness within an operating voltage range of a lithium-ion battery.

4. The electrolyte according to any one of claims 1 to 3, **characterized in that** the metal ions comprise K⁺.

5. The electrolyte according to any one of claims 1 to 4, **characterized in that** the electrolyte further comprises lithium ions, wherein a molar concentration C_{Li} of the lithium ions in the electrolyte satisfies: 0.8 M≤C_{Li}≤1.2 M.

6. The electrolyte according to any one of claims 1 to 5, **characterized in that** the electrolyte comprises an inorganic salt, and the inorganic salt comprises the metal ions and anions; wherein
the anions comprise at least one of hexafluorophosphate, tetrafluoroborate, perchlorate, nitrate, carbonate, bis(trifluoromethanesulfonyl)imide, trifluoromethanesulfonate, difluoro(oxalato)borate, bis(oxalato)borate, methanesulfonate, and halogen anions.

7. The electrolyte according to any one of claims 1 to 6, **characterized in that** the electrolyte comprises a solvent, and the solvent comprises a non-aqueous solvent; and optionally, the solvent comprises a carbonate-based solvent.

8. The electrolyte according to claim 7, **characterized in that** the carbonate-based solvent comprises at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, and halogenated derivatives of the carbonates.

9. A lithium-ion battery, **characterized in that** the lithium-ion battery comprises the electrolyte according to any one of claims 1 to 8.

10. The lithium-ion battery according to claim 9, **characterized in that** a CB value of the lithium-ion battery satisfies: 1.03≤CB≤1.2, wherein the CB value is a ratio between a capacity of a negative electrode active material per unit area and a capacity of a positive electrode active material per unit area.

11. The lithium-ion battery according to claim 9 or 10, **characterized in that** the lithium-ion battery comprises a negative electrode plate, the negative electrode plate comprises a negative electrode active material, and the negative electrode active material comprises graphite.

12. An electric device, **characterized in that** the electric device comprises the lithium-ion battery according to any one of claims 9 to 11.
